Europäisches Patentamt

European Patent Office

Office européen des brevets

(19)

(11) Numéro de publication : **0 089 865**
**B1**

(12)

# FASCICULE DE BREVET EUROPÉEN

(45) Date de publication du fascicule du brevet :
26.06.85

(51) Int. Cl.⁴ : **G 11 B 23/04**

(21) Numéro de dépôt : 83400435.0

(22) Date de dépôt : 03.03.83

(54) Cassette à courroie élastique à vitesse contrôlée.

(30) Priorité : 17.03.82 FR 8204546

(43) Date de publication de la demande :
28.09.83 Bulletin 83/39

(45) Mention de la délivrance du brevet :
26.06.85 Bulletin 85/26

(84) Etats contractants désignés :
CH DE GB IT LI NL SE

(56) Documents cités :
EP-A- 0 055 150
FR-A- 1 395 958
FR-A- 2 420 817
US-A- 2 658 398
US-A- 4 159 811
US-A- 4 162 774
US-A- 4 172 569
US-A- 4 199 794

(73) Titulaire : ENERTEC
12 Place des Etats Unis
F-92120 Montrouge (FR)

(72) Inventeur : Merle, Jean-Pierre
7, rue Cécile Dinant
F-92140-Clamart (FR)

(74) Mandataire : Bentz, Jean-Paul
GIERS SCHLUMBERGER Service BREVETS 12, place
des Etats-Unis
F-92124 Montrouge Cedex (FR)

EP 0 089 865 B1

## Description

La présente invention concerne un dispositif d'entraînement de bande, notamment pour enregistreur magnétique, comprenant : un bâti, deux tambours montés tournants dans un même plan sur ledit bâti autour de deux axes parallèles respectifs ; une bande entourant l'un au moins des tambours, la bande et les deux tambours sur lesquels elle peut s'enrouler formant deux bobines reliées par une portion de bande accessible ; un galet baladeur tournant dans le même plan que les bobines et tangent à la périphérie de chacune de celles-ci ; et une courroie sans fin, tendue, susceptible de subir un allongement élastique, passant entre le galet baladeur et les bobines, de manière à définir par rapport aux endroits du contact galet baladeur/courroie/bobine, une première boucle entourant le galet baladeur et une seconde boucle venant en appui sur un arc de la périphérie de chacune des bobines pour assurer la tension de la portion de bande accessible, cette seconde boucle passant autour d'au moins un galet de renvoi monté tournant autour d'un axe fixe par rapport au bâti.

Des dispositifs de ce type sont connus par le brevet des Etats-Unis, n° 3.907.230 auquel on pourra se reporter pour apprécier le rôle de la courroie élastique.

Si ces dispositifs ont su donner entière satisfaction même dans des conditions sévères d'utilisation, il est cependant apparu que les bobines de bande avaient tendance à former des paquets de spires disjoints lorsqu'elles sont stockées à basse température.

Le but de l'invention est de proposer un dispositif du type précité évitant ce genre d'inconvénient.

A cette fin, dans le dispositif conforme à l'invention, au moins un galet de renvoi de la seconde boucle de la courroie élastique est directement entraîné par un moyen d'entraînement de manière que la vitesse périphérique du galet de renvoi entraîné et la vitesse périphérique du galet baladeur soient maintenues dans un rapport appartenant au voisinage supérieur de 1.

En effet, il a été découvert, dans le cadre de l'invention, par des mesures effectuées sur des dispositifs de l'art antérieur de la tension de la spire extérieure de la bande sur la bobine réceptrice, que cette tension, qui varie d'ailleurs en fonction du remplissage de la bobine, pouvait, dans des conditions défavorables, s'annuler, voir même laisser place à un relâchement ou mou de la bande, avec comme conséquence, la formation de vides séparant des paquets de spires de la bobine enroulée.

Or, la tension de bande de la spire extérieure de la bobine réceptrice est influencée, suivant une fonction d'ailleurs non encore explicitée, par le frottement de la courroie élastique régulatrice, qui s'appuie sur un arc de la périphérie de ladite bobine. La partie de la courroie directement concernée par le phénomène est la partie de la seconde boucle de la courroie située entre le contact galet/baladeur/courroie/bobine et le (ou l'un des) galet de renvoi de courroie intéressant cette seconde boucle.

On s'est aperçu, dans le cadre de l'invention, que l'annulation de tension de la spire extérieure de la bande, pouvait être considérée comme due à une perte de vitesse locale de la courroie élastique en aval du contact galet baladeur/courroie/bobine. Autrement dit, dans les dispositifs de l'art antérieur où le galet de renvoi de courroie est un galet libre, rien ne permet de combattre cette perte locale de vitesse, même si, évidemment, elle se trouve rattrapée globalement à un niveau mal déterminé, en considérant la totalité de la courroie. L'invention, au contraire, s'oppose au freinage local de la courroie en imposant, grâce à un entraînement direct adéquat du galet de renvoi, une survitesse pour maintenir en toutes circonstances la tension minimum de bande sur la bobine d'enroulement à une valeur de seuil positive (par exemple de 10 à 20 g de tension).

Ainsi, selon l'invention, la maîtrise de la vitesse de la courroie élastique dans la région de la seconde boucle considérée est assurée quand on maintient la vitesse périphérique du galet de renvoi entraîné et celle du galet baladeur (servant de référence) dans un rapport constant appartenant au voisinage supérieur de 1.

Quoique les valeurs précises adoptées en pratique dépendent de plusieurs facteurs et notamment de l'élasticité de la courroie, une survitesse relative du galet de renvoi de 1 à 8 % par rapport à la vitesse périphérique du galet baladeur représente en général un bon choix. La survitesse est de préférence de 2 %.

Il est avantageux de maintenir constant le rapport des vitesses périphériques du galet de renvoi et du galet baladeur en les reliant cinématiquement à un organe moteur commun, via une transmission cinétique constante directe ou indirecte ; on choisit avantageusement pour réduire le poids et l'inertie de l'ensemble, une transmission par courroie légère et inextensible.

Une cassette à courroie élastique qui a un galet tournant autour d'un axe fixe au lieu d'un galet baladeur est connue, par exemple de US-A-4 199 794, de US-A-4 172 569 et de US-A-4 162 774. Dans une telle cassette il faut que les tensions des parties de la courroie élastique qui contactent les bobines soient différentes. A cette fin il est connu de relier par une autre courroie le galet tournant autour d'un axe fixe et au moins un des galets de renvoi de la courroie élastique, ou de freiner les galets de renvoi, la vitesse périphérique du galet de renvoi étant donc différente de celle du galet tournant autour d'un axe fixe.

L'invention sera mieux comprise grâce à la description qui va suivre de deux modes de réalisation préférés en référence aux dessins annexés sur lesquels :

la figure 1 représente en perspective les organes essentiels d'un dispositif de l'invention, dans le cadre d'un chargeur à entraînement de bande par le galet baladeur ;

la figure 2 représente en vue de dessous le chargeur complet de la fig. 1, couvercle enlevé ;

la figure 3 représente, en perspective analogue à la fig. 1, un second dispositif de l'invention dans le cadre d'une cassette à entraînement de bande par pincement direct ;

la figure 4 est une coupe schématique d'un cabestan de renvoi de bande de la cassette de la figure 3.

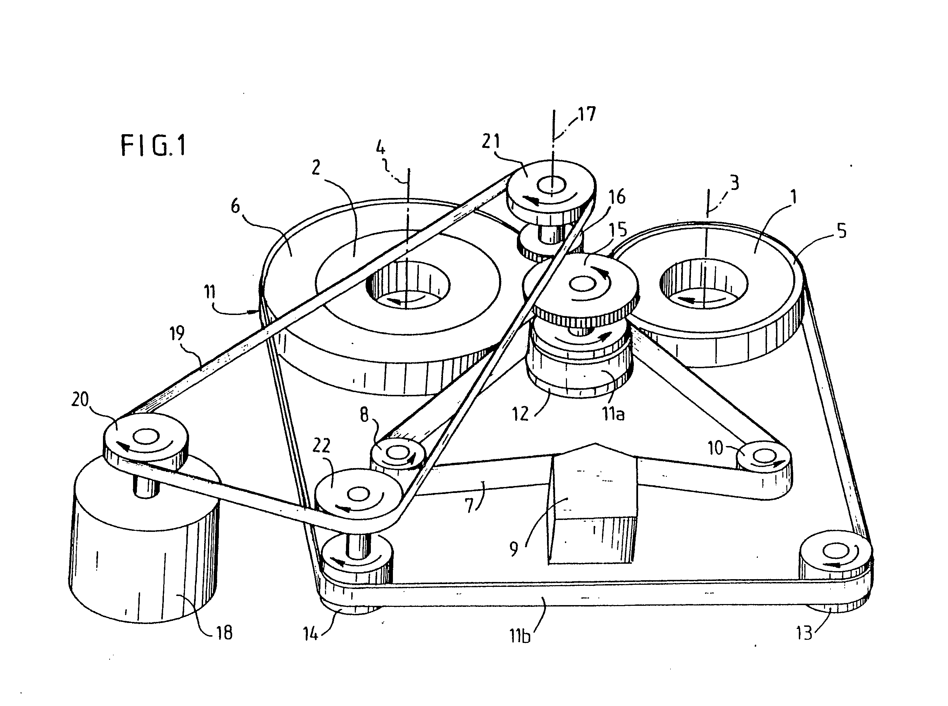

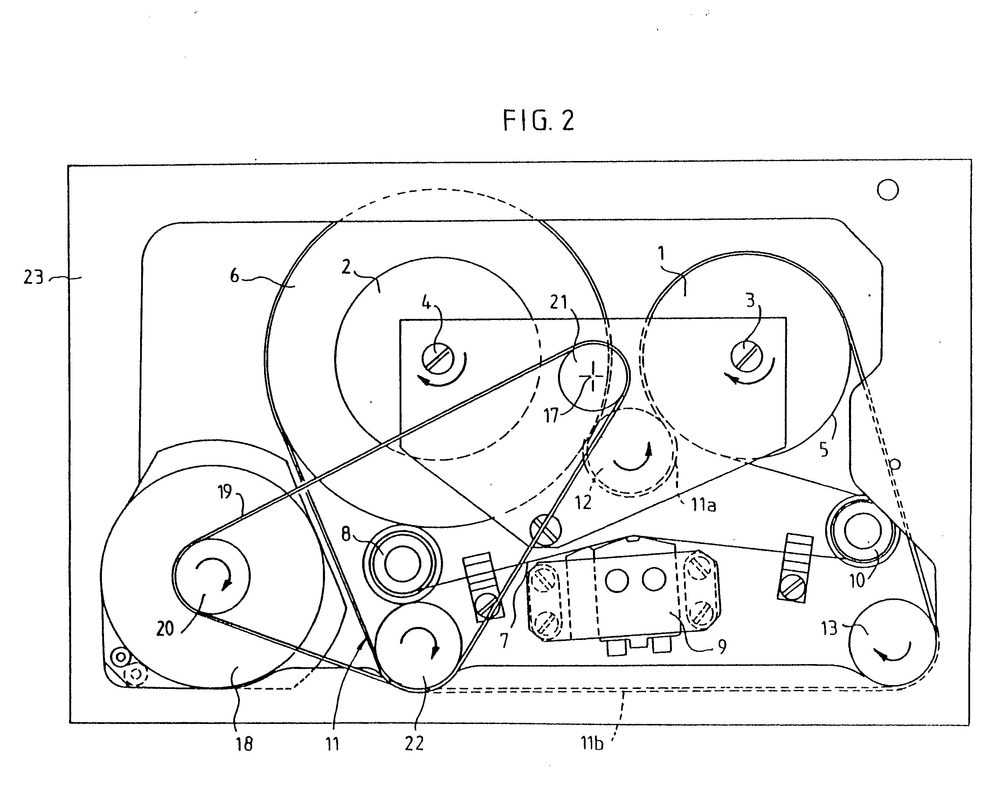

On voit sur les figures 1 et 2 deux tambours 1 et 2 montés tournants dans un même plan autour de deux axes parallèles respectifs 3, 4 liés au bâti 23 d'une cassette ou chargeur. Une bande magnétique entoure les tambours 1 et 2 de façon à former deux bobines 5 et 6 reliées par une portion de bande accessible 7.

La portion de bande accessible 7 est déroulée (dans l'exemple représenté) de la bobine 6 qui tourne dans le sens indiqué par la flèche ; elle passe sur le cabestan de renvoi 8, devant la tête magnétique 9, sur le cabestan de renvoi 10, et s'enroule sur la bobine 5.

Une courroie élastique sans fin 11 passe entre les bobines 5 et 6 et un galet baladeur 12 qu'elle maintient en contact tangent avec les deux bobines (au travers de la courroie) du côté de la bande accessible. Les deux lignes de contact galet baladeur 12/courroie 11/bobines 5, 6 permettent de distinguer topologiquement deux boucles de la courroie ; une première boucle 11a qui entoure et applique le galet baladeur 12 contre les bobines, et une seconde boucle 11b correspondant à la partie de courroie située de l'autre côté des deux lignes de contact. Cette seconde boucle vient en appui sur un arc de la périphérie de chacune des bobines 5, 6 et est maintenue tendue en passant sur deux galets de renvoi 13, 14.

Dans l'exemple représenté, les deux galets de renvoi 13 et 14 sont situés, par rapport au galet baladeur 12, d'un même côté d'un plan qui contiendrait les axes 3 et 4 des tambours 1 et 2. Par rapport à la solution alternative consistant à implanter les galets de renvoi et donc toute la seconde boucle de l'autre côté dudit plan par rapport au galet baladeur, la solution retenue présente l'avantage d'offrir une plus grande longueur d'arc de bobine enveloppé par la courroie, et de permettre d'utiliser une courroie élastique 11 de plus grande longueur pour un même format de chargeur, ce qui est souhaitable pour l'exploitation des propriétés élastiques de la courroie.

Le galet baladeur 12 est l'organe d'entraînement du système, entraînant la bande par friction par l'intermédiaire de la courroie 11, au niveau des deux contacts galet 12/courroie 11/bobine 5, 6.

Selon un montage connu par la demande EP-A-55 150 (publiée le 30.06.82) au nom de la Demanderesse, le galet 12 est solidaire en rotation d'un pignon 15 qui lui est coaxial, lequel engrène avec un pignon 16 d'axe 17 fixe par rapport au bâti de la cassette. Le pignon 16 qui pourrait être directement claveté sur l'arbre d'un moteur, est, dans l'exemple représenté, entraîné par un moteur 18 placé de côté dans le chargeur, par l'intermédiaire d'une courroie de transmission 19 pratiquement inextensible passant sur deux disques 20 et 21 respectivement coaxiaux à et solidaires en rotation avec l'arbre du moteur 18 et le pignon 16.

Afin de communiquer à la spire extérieure de la bobine 5, partiellement enveloppée par la partie de seconde boucle 11b de courroie élastique 11 juste en aval du contact galet 12/courroie 11/bobine 5, une tension minimum suffisante, on combat les pertes de vitesse locales de ladite partie de seconde boucle 11b (c'est-à-dire la partie amont de seconde boucle 11b, en se référant au sens de défilement) en entraînant directement la courroie 11 au niveau d'au moins un des deux galets de renvoi 13,14. L'expérience montre que l'action sur un seul des galets est suffisante, le choix du galet étant sans importance et indépendant du sens de déroulement de bande.

Pour ce faire, on entraîne le galet 14 en faisant passer la courroie de transmission 19 autour d'un disque 22 coaxial au galet 14 et solidaire en rotation avec lui.

Le rayon du disque 22 est choisi en fonction des dimensions des autres organes pour donner à la vitesse périphérique du galet 14 l'excès désiré par rapport à celle du galet baladeur 12, c'est-à-dire maintenir les deux vitesses dans un rapport compris entre 1,01 et 1,08, et, de préférence, égal à 1,02.

L'élasticité du matériau de la courroie 11 et celle de la courroie tendue est choisie suffisante, comme dans les dispositifs de l'art antérieur, pour garantir un fonctionnement fiable, dans le temps (absence de fluage), dans de larges domaines de températures, et pour supporter des conditions de travail par à-coups qui induisent des contraintes locales très fortes dans des temps très courts.

On peut retenir qu'il est souhaitable que la réserve d'allongement élastique de la courroie avant montage soit d'au moins 50 %, et que la réserve d'allongement élastique de la courroie montée soit d'au moins 10 %.

Ainsi, dans deux exemples d'application différents, on a pu monter deux courroies respectivement de 1,4 mm d'épaisseur au repos, tendue à 14 % (avec une réserve de 36 %), et de 1 mm d'épaisseur au repos, tendue à 31 % (avec une réserve d'allongement de 19 %). Les courroies n'ont pas la même épaisseur, compte tenu du fait que, pour obtenir une même tension de bande, l'épaisseur de la courroie doit diminuer quand l'allongement augmente.

Dans un autre exemple d'application particulièrement satisfaisant pour la sécurité dans le temps et les températures extrêmes, on a utilisé pour la courroie 11 un matériau ayant une capacité d'allongement de 700 % à 800 %, la courroie étant tendue à 30 %. La très grande réserve d'allongement disponible recommande cette application pour une utilisation de la cassette avec des va-et-vient fréquents de la bande.

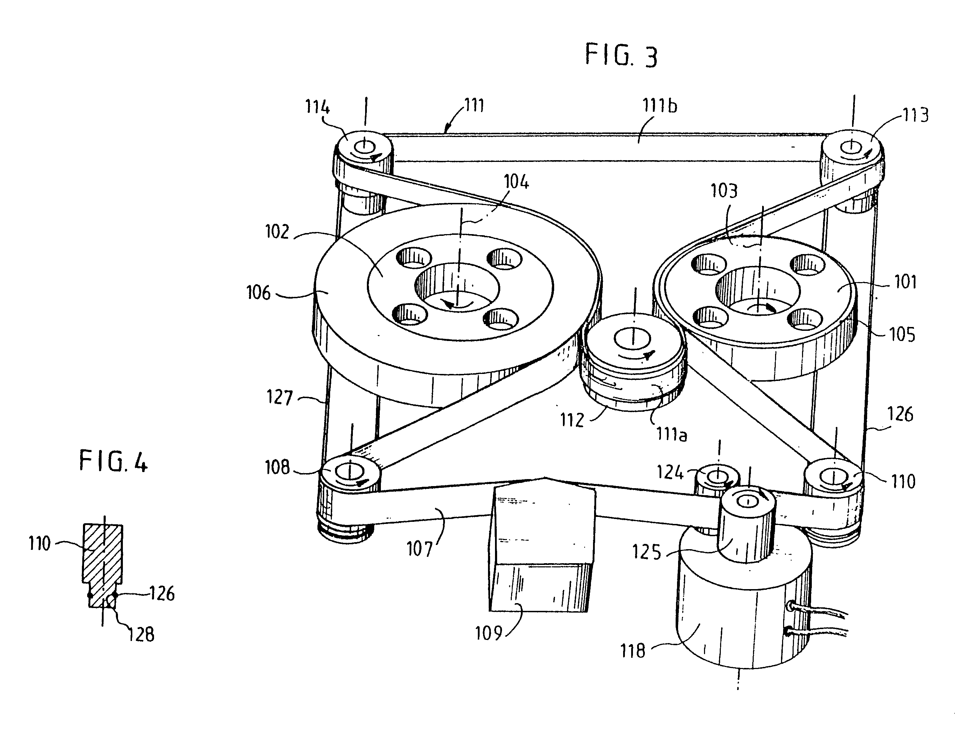

Sur la figure 3, qui représente un autre mode de réalisation de l'invention sur une cassette dont la bande magnétique est entraînée directement par pincement de sa portion accessible entre deux galets, les organes analogues à ceux des figures 1 et 2 portent la même référence numérique, augmentée de 100.

La portion de bande accessible 107 est déroulée de la bobine débitrice 106 ; elle passe sur le cabestan de renvoi 108, devant la tête magnétique 109 ; est pincée entre le galet presseur 124 et le galet d'entraînement 125 monté sur l'axe du moteur 118, passe sur le cabestan de renvoi 110, et s'enroule sur la bobine réceptrice 105.

La courroie élastique 111 forme une première boucle 111a autour du galet baladeur 112 et une seconde boucle 111b autour des deux galets de renvoi biconiques 113 et 114, situés, par rapport au galet baladeur 112, de l'autre côté d'un plan qui contiendrait les axes 103 et 104 des tambours 1 et 2 des bobines 105 et 106.

Dans ce mode de réalisation, les deux galets de renvoi de courroie 113, 114 sont entraînés chacun par un cabestan de renvoi de bande 110, 108, au moyen d'une courroie de transmission 126, 127. Cette courroie 126, 127 peut être une courroie torique passant dans une gorge 128 (cf. fig. 4) prévue sur les galets 113, 114 ou cabestans 108, 110 à un niveau ne gênant pas le défilement de la courroie ou de la bande.

Les diamètres respectifs des gorges 128 d'un cabestan 108, 110, et de son galet entraîné associé 114, 113 sont calculés en fonction du diamètre des cabestan et galet au niveau du défilement de la bande et de la courroie élastique 111 pour assurer aux galets de renvoi 114, 113 la survitesse désirée par rapport au galet baladeur 112.

A titre d'exemple, avec un cabestan de renvoi 110 de diamètre de 14 mm au niveau de la bande, et 12,5 mm au niveau de la gorge 128, un galet de renvoi 113 de diamètre 14,5 mm au niveau de la courroie 111 et 11,5 mm au niveau de la gorge 128, le rapport des vitesses périphériques entre le galet de renvoi 113 et le galet baladeur 112 est de $12,5/14 \times 14,5/11,5 = 1,13$, en négligeant les épaisseurs des courroies et bande, ainsi que les glissements éventuels possibles, notamment entre la bande 107 et le cabestan 110 (ou 108) qui doit transmettre un couple au galet de renvoi 113 (ou 114). L'expérience montre cependant que les valeurs indiquées ci-dessus donnent bien satisfaction et assurent une bonne tension de la bande magnétique sur la bobine réceptrice 105.

Bien qu'on ait représenté les deux galets de renvoi de courroie entraînés par les deux cabestans de renvoi de bande par surcroît de sécurité, on pourrait, comme dans le premier mode de réalisation, n'entraîner qu'un seul des cabestans, ou faire passer une courroie de transmission unique sur un cabestan et deux galets, deux cabestans et un galet, les deux cabestans et les deux galets.

**Revendications**

1. Dispositif d'entraînement de bande, notamment pour enregistreur magnétique, comprenant : un bâti (23), deux tambours (1, 2, 101, 102) montés tournants dans un même plan sur ledit bâti autour de deux axes parallèles respectifs (3, 4, 103, 104) ; une bande entourant l'un au moins des tambours, la bande et les deux tambours sur lesquels elle peut s'enrouler formant deux bobines (5, 6, 105, 106) reliées par une portion de bande accessible (7, 107) ; un galet baladeur (12, 112) tournant dans le même plan que les bobines (5, 6, 105, 106) et tangent à la périphérie de chacune de celles-ci ; et une courroie sans fin (11, 111), tendue, susceptible de subir un allongement élastique, passant entre le galet baladeur (12, 112) et les bobines (5, 6, 105, 106) de manière à définir par rapport aux endroits du contact galet baladeur (12, 112)/courroie (11, 111)/bobine (5, 6, 105, 106), une première boucle (11a, 111a) entourant le galet baladeur (12, 112) et une seconde boucle (11b, 111b) venant en appui sur un arc de la périphérie de chacune des bobines (5, 6, 105, 106) pour assurer la tension de la portion de bande accessible (7, 107), cette seconde boucle (11b, 111b) passant autour d'au moins un galet de renvoi (13, 14, 113, 114) monté tournant autour d'un axe fixe par rapport au bâti, caractérisé en ce qu'au moins un galet de renvoi (14, 114) de la seconde boucle (11b, 111b) de la courroie élastique (11, 111) est directement entraîné par un moyen d'entraînement (18, 19 ; 118, 107, 127) de manière que la vitesse périphérique du galet de renvoi entraîné (14, 114) et la vitesse périphérique du galet baladeur (12, 112) soient maintenues dans un rapport appartenant au voisinage supérieur de 1.

2. Dispositif selon la revendication 1, caractérisé en ce que le rapport des vitesses est maintenu constant.

3. Dispositif selon l'une quelconque des revendications 1 ou 2, caractérisé en ce que le rapport des vitesses est compris entre 1,01 et 1,08.

4. Dispositif selon l'une quelconque des revendications 1 à 3, caractérisé en ce que la seconde boucle (11b) de la courroie élastique (11) passe autour de deux galets de renvoi (13, 14) situés, par rapport au galet baladeur (12), du même côté d'un plan contenant les axes (3, 4) des tambours (1, 2).

5. Dispositif selon l'une quelconque des revendications 1 à 4, caractérisé en ce que le galet de renvoi entraîné (14, 114), et le galet baladeur (12, 112) sont cinématiquement liés à un organe moteur commun (18, 118).

6. Dispositif selon la revendication 5, dans lequel le galet baladeur (12) constitue l'organe d'entraînement de la bande (7) et entraîne cette bande par friction par l'intermédiaire de ladite courroie élastique (11) sur laquelle il appuie, caractérisé en ce que le galet baladeur (12) est solidaire en rotation d'un pignon (15) engrenant un pignon (16) d'axe fixe par rapport au bâti, ce dernier pignon (16) étant entraîné par l'organe moteur commun (18) au moyen d'une transmission par courroie (19), ladite courroie de transmission (19) entraînant également le galet de renvoi (14).

7. Dispositif selon la revendication 5, dans lequel la bande (107) est entraînée par pincement entre un galet presseur (124) et un galet d'entraînement (125) mû par l'organe moteur (118) et passe sur deux cabestans de renvoi (108, 110), caractérisé en ce qu'au moins un cabestan de renvoi (108) entraîne au moins un galet de renvoi (114) au moyen d'une courroie de transmission (127).

8. Dispositif selon la revendication 7, caractérisé en ce que les cabestans de renvoi (108, 110) entraînent chacun un galet de renvoi (114, 113).

## Claims

1. A tape transport device, specifically for a magnetic tape recorder, comprising : a frame (23), two cylinders (1, 2, 101, 102) mounted rotating within a same plane upon said frame about two respective parallel axes (3, 4, 103, 104) ; a tape surrounding at least one of said cylinders, whereby the tape and both cylinders around which it winds form two reels (5, 6, 105, 106) connected by an accessible tape portion (7, 107) ; a sliding roller (12, 112) rotating within the same plane as the reels (5, 6, 105, 106) and tangent to the periphery of each of them ; and a taut, endless belt (11, 111), able to undergo a resilient elongation, passing between the slinding roller (12, 112) and reels (5, 6, 105, 106) so as to define, relative to the sliding roller (12, 112)/belt (11, 111)/reel (5, 6, 105, 106) contact points, a first loop (11a, 111a) surrounding the sliding roller (12, 112) and a second loop (11b, 111b) supported by an arc of the periphery of each of the reels (5, 6, 105, 106) for tensioning the accessible tape portion (7, 107), the latter loop (11b, 111b) passing around at least one guide roller (13, 14, 113, 114) mounted rotating about a fixed axis relative to the frame, characterized in that at least one guide roller (14, 114) in the second loop (11b, 111b) of the elastic belt (11, 111) is directly driven by driving means (18, 19 ; 118, 107, 127) so that the peripheral velocity of the driven guide roller (14, 114) and the peripheral velocity of the sliding roller (12, 112) be maintained at a ratio close to but greater than unity.

2. A device according to claim 1, characterized in that the velocity ratio is kept constant.

3. A device according to any of claims 1 and 2, characterized in that the velocity ratio is in the range from 1.01 to 1.08.

4. A device according to any of claims 1 to 3, characterized in that the second loop (11b) of the elastic belt (11) passes around two guide rollers (13, 14) located, relative to the sliding roller (12), on the same side of a plane containing the axes (3, 4) of the cylinders (1, 2).

5. A device according to any of claims 1 to 4, characterized in that the driven guide roller (14, 114), and the sliding roller (12, 112) are kinematically bound to a common motor unit (18, 118).

6. A device according to claim 5, wherein the sliding roller (12) is the driving element of the tape (7) and frictionally drives said tape by means of said elastic belt (11) by which it is supported, characterized in that the sliding roller (12) is rotatively rigidly mounted on a pinion (15) engaged with a pinion (16) having a fixed axis relative to the frame, the latter pinion (16) being driven by the common motor unit (18) by means of a belt transmission (19), wherein said transmission belt (19) also drives the guide roller (14).

7. A device according to claim 5, wherein the tape (107) is driven by being pinched between a pinch roller (124) and a drive capstan (125) actuated by motor unit (118) and passes around two guide capstans (108, 110), characterized in that at least one guide capstan (108) drives at least one guide roller (114) by means of a transmission belt (127).

8. A device according to claim 7, characterized in that the guide capstans (108, 110) each drive a guide roller (114, 113).

## Patentansprüche

1. Bandantriebsvorrichtung, insbesondere für ein magnetisches Aufzeichnungsgerät, enthaltend : ein Gestell (23), zwei Trommeln (1, 2, 101, 102), die in derselben Ebene drehbar und um je eine von zwei parallelen Achsen (3, 4, 103, 104) an dem Gestell gelagert sind ; ein wenigstens eine der Trommeln umgebendes Band, wobei das Band und die zwei Trommeln, um die es herumgeschlungen werden kann, zwei Spulen (5, 6, 105, 106) bilden, die durch einen zugänglichen Bandteil (7, 107) verbunden sind ; eine Schubrolle (12, 112), die in derselben Ebene wie die Spulen (5, 6, 105, 106) rotiert und zum Umfang jeder derselben tangential ist ; und einen Endlosriemen (11, 111), der gespannt ist und elastisch gedehnt werden kann sowie zwischen der Schubrolle (12, 112) und den Spulen (5, 6, 105, 106) durchläuft, so daß er in bezug auf die Kontaktstellen zwischen Schubrolle (12, 112), Riemen (11, 111) und Spule (5, 6, 105, 106) eine erste Schleife (11a, 111a), welche die Schubrolle (12, 112) umgibt, und eine zweite Schleife (11b, 111b) bildet, die an einem Bogen am Umfang jeder der Spulen (5, 6, 105, 106) in Anlage kommt, um die Spannung des zugänglichen Bandteiles (7, 107) zu gewährleisten, wobei diese zweite Schleife (11b, 111b) um wenigstens eine Umlenkrolle (13, 14, 113, 114) herum verläuft, welche drehbar auf einer gestellfesten Achse gelagert ist, dadurch gekennzeichnet, daß wenigstens eine Umlenkrolle (14, 114) der zweiten Schleife (11b, 111b) des elastischen Riemens (11, 111) direkt durch eine Antriebseinrichtung (18, 19 ; 118, 107, 127) angetrieben wird, so daß die Umfangsgeschwindigkeit der angetriebenen Umlenkrolle (14, 114) und die Umfangsgeschwindigkeit der Schubrolle (12, 112) in einem Verhältnis gehalten werden, das ungefähr gleich und größer als 1 ist.

2. Vorrichtung nach Anspruch 1, dadurch gekennzeichnet, daß das Verhältnis der Geschwindigkeiten konstant gehalten wird.

3. Vorrichtung nach Anspruch 1 oder 2, dadurch gekennzeichnet, daß das Geschwindigkeitsverhältnis zwischen 1,01 und 1,08 liegt.

4. Vorrichtung nach einem der Ansprüche 1 bis 3, dadurch gekennzeichnet, daß die zweite Schleife (11b) des elastischen Riemens (11) um zwei Umlenkrollen (13, 14) herum verläuft, die in bezug auf die Schubrolle (12) auf derselben Seite einer Ebene liegen, welche die Achsen (3, 4) der Trommeln (1, 2) enthält.

5. Vorrichtung nach einem der Ansprüche 1 bis 4, dadurch gekennzeichnet, daß die angetriebene Umlenkrolle (14, 114) und die Schubrolle (12, 112) kinematisch mit einem gemeinsamen Antriebsorgan (18, 118) verbunden sind.

6. Vorrichtung nach Anspruch 5, bei welcher die Schubrolle (12) das Antriebsorgan für das Band (7) bildet und dieses Band durch Reibung über den genannten elastischen Riemen (11) antreibt, gegen den er angedrückt wird, dadurch gekennzeichnet, daß die Schubrolle (12) drehfest mit einem Ritzel (15) verbunden ist, welches mit einem eine gestellfeste Achse aufweisenden Ritzel (16) kämmt, das durch das gemeinsame Antriebsorgan (18) über eine Riemenübertragung (19) angetrieben wird, wobei der Übertragungsriemen (19) auch die Umlenkrolle (14) antreibt.

7. Vorrichtung nach Anspruch 5, bei welcher das Band (107) durch Einklemmen zwischen einer Druckrolle (124) oder einer Antriebsrolle (125) angetrieben wird, die durch das Antriebsorgan (118) angetrieben wird, und über zwei Umlenk-Bandantriebsrollen (108, 110) geführt ist, dadurch gekennzeichnet, daß wenigstens eine Bandantriebsumlenkrolle (108) wenigstens eine Umlenkrolle (114) über einen Übertragungsriemen (127) antreibt.

8. Vorrichtung nach Anspruch 7, dadurch gekennzeichnet, daß die Bandantriebs-Umlenkrollen (108, 110) jeweils eine Umlenkrolle (114, 113) antreiben.

FIG.1

0 089 865

FIG. 2

FIG. 3

FIG. 4

0 089 865